Europäisches Patentamt

(19) European Patent Office

Office européen des brevets

(11) Publication number: 0 448 398 A1

# (12) EUROPEAN PATENT APPLICATION

(21) Application number: 91302487.3

(22) Date of filing: 21.03.91

(51) Int. Cl.⁵: **B60S 1/38**, B60S 1/52

(30) Priority: 22.03.90 GB 9006430

(43) Date of publication of application:
25.09.91 Bulletin 91/39

(84) Designated Contracting States:
BE DE ES FR IT

(71) Applicant: TRICO-FOLBERTH LIMITED
Great West Road
Brentford Middlesex TW8 9HP (GB)

(72) Inventor: Frimley, Charles Henry
16, Heathfield Gardens
Retford, Nottinghamshire DN22 7LG (GB)

(74) Representative: Pedder, James Cuthbert
J.C. Pedder & Co. 38 Norbury Cross
Norbury London SW16 4JQ (GB)

(54) Windscreen wiper blade.

(57) A windscreen wiper blade (1) comprises a harness (3, 7) including a plurality of yokes or levers carrying a blade rubber (13). A vane (17) extends towards the intended direction of the windscreen (23) from a part of the blade away from the blade rubber (13). The free edge of the vane (17) carries at least one roller (25) intended to engage the windscreen (23).

Thew invention also includes the vane on its own when provided for updating existing windscreen wiper blades.

FIG.2

# WINDSCREEN WIPER BLADE

This invention relates to a windscreen wiper blade and more particularly to a windscreen wiper blade specially adapted to reduce the lifting effects of airflow thereon.

With the advent of high speed vehicles, there have increasingly become problems relating to the air flow over the vehicle at the higher speeds. With the use of conventional windscreen wiper blades, the airflow at the higher speeds tends to get under the windscreen wiper blade and lift it off the windscreen, significantly impairing vision with possibly disastrous consequences.

Many attempts have been made to overcome this problem by the use of vanes located on the upstream airflow side of the windscreen wiper blade with varying degrees of success. Such an arrangement could be very successful if windscreens were flat since it would be possible to almost entirely shield the working part of the windscreen wiper blade from the airflow. Unfortunately, not only do modern vehicles have curved windscreens but the curvature of the windscreen varies over the surface area. Therefore, in order to ensure that the vane clears the windscreen, avoiding scratching the glass, the closeness of the vane to the windscreen has to be significantly reduced, thus reducing the shielding effect produced.

One proposal for overcoming this problem resided in making the lower or windscreen end of the vane from a material similar to or the same as the blade rubber so that, should the vane engage the windscreen, it would not scratch it. However, this produced manufacturing difficulties, and where engagement with the windscreen occurred, wear of the vane and significant drag on the windscreen wiper mechanism.

The present invention seeks to obviate or substantially reduce some or all of the above problems.

According to the invention, a windscreen wiper blade comprises a harness including a plurality of yokes or levers carrying a blade rubber and a vane extending towards the intended direction of the windscreen from a part of the blade away from the blade rubber, the free edge of the vane carrying at least one roller intended to engage the windscreen.

Preferably, the vane carries two rollers spaced apart. These rollers may be located one third of the length of the vane from each end or may be located at each end of the vane.

The vane is may be pivotally connected to the wiper blade.

The face of the vane nearest to the wiper blade may carry a channel for screenwash fluid and this channel may be provided with one or more washer jets.

The invention not only includes a windscreen wiper blade incorporating the roller supported vane but also includes the vane itself for use in modifying existing windscreen wiper blades.

The invention will now be described in greater detail, by way of example, with reference to the drawings, in which:-

Figure 1 is a perspective diagrammatic view of a windscreen wiper blade in accordance with the invention, and

Figure 2 is a sectional view taken on the line II - II of figure 1.

Referring to the drawings, there is shown a windscreen wiper blade 1 of which a part of the main yoke 3 and of two subsidiary yokes 5 and 7 pivoted at 9 and 11 to the main yoke 3 can be seen. The blade rubber carried by the subsidiary yokes 5 and 7 is shown at 13 while the arm for driving the blade 1 over an arc of the windscreen is shown at 15.

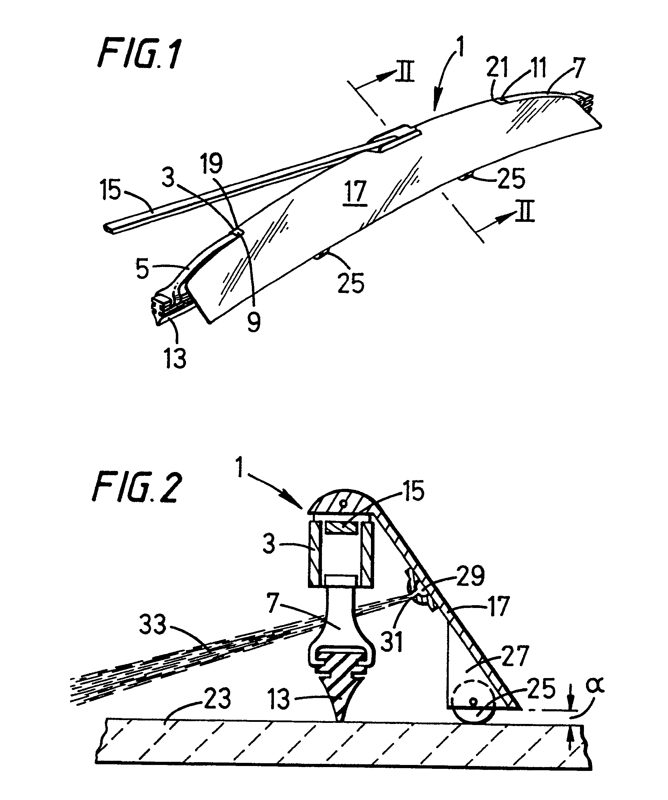

In addition to the subsidiary yokes 5 and 7, the main yoke 3 carries a vane 17 which is pivoted to the primary yoke 3, adjacent to the pivots 9 and 11, at 19 and 21. The vane 17 extends substantially the full length of the windscreen wiper blade 1 and extends downwardly (towards the windscreen 23) at an angle to the vertical plane of the blade 1. As can be seen particularly from figure 2, the vane 17 extends almost to the windscreen 23 so as to be spaced therefrom by a distance $\alpha$. The vane 17 is supported above the windscreen by two rollers 25 carried to the rear of the vane 17 by housing 27. In order to prevent excessive movement of the vane and also the possibility of the vane 17 ending up lying in an upward direction instead of a downward direction, the arc of the pivots 19 and 21 may be limited.

Also carried by the rear of the vane is a channel 29 for screenwash liquid. Preferably, the channel 29 is provided with a plurality of washer jets 31 which are arranged to shoot a jet 33 of wash liquid between the members of the blade harness and on to the windscreen ahead of the blade 1 when the blade is moving to the left in figure 2.

In use, the rollers 25 are held in contact with the windscreen 23 by a combination of the weight of the vane 17 and the pressure of the air flow acting upon it. Because the vane 17 is pivoted, the rollers 25 will always be able to maintain contact with the windscreen 23 despite various movements of the blade 1. Depending on the position and the material of the rollers 25, the rollers will have little or no effect on the wiping of the screen but enable the vane to be maintained as close to the windscreen as possible without actual contact taking place. The vane 17 may be made of any suitable material and could in practice be either of plastics material or metal. Where the vane is made from a plastics material, the housing 17 for the

2

rollers will provide some stiffening to the blade but if required, a number of further webs may be provided for extra stiffening.

It will be appreciated that various modifications may be made to the above described embodiment without departing from the scope of the invention. For example, instead of having the rollers 25 located one third of the way along the vane 17, they could, for example, be located at the vane ends. If in this latter case, the vane 17 is made of a somewhat flexible material, a further roller or rollers 25 could be located between the ends of the vane so that, with flexing of the blade 1, and thus of the vane 17, the edge of the vane could still be prevented from engagement with the windscreen 23. Alternatively, in certain cases, a single roller 25 could be sufficient, preferably located in the middle of the vane 17.

If the vane 17 is designed for the curvature of the windscreen of one particular car, then the pivots 19 and 21 could be dispensed with. If, on the contrary, the pivot arc is increased to allow the vane to lie parallel to the vertical plane of the blade 1, then the vane could be used as a parking device to lift the blade rubber 13 off the windscreen when the windscreen wiper is parked and not in use. To this end, the vane 17 would be provided with a rubber or like edge (not shown) to avoid scratching the screen or the adjacent bodywork. If the blade 1 is parked at the end of a rightward movement in figure 2, re-commencement of wipe would move the blade 1 in a leftward direction and cause the vane 17 to move automatically from the parked position to the running position shown in figure 2.

The vane may be manufactured so as to form a part of the blade 1 or may be provided as a clip on accessory for attachment to an existing blade.

From the foregoing, it will be seen that the invention, in its specific embodiments, provides a windscreen wiper blade which can provide good shielding of the blade from airflow which might tend to lift the blade from the windscreen while at the same time protecting the windscreen itself from damage.

## Claims

1. A windscreen wiper blade (1) comprising a harness including a plurality of yokes or levers (3,5) carrying a blade rubber (13) and a vane (17) extending towards the intended direction of the windscreen (23) from a part of the blade (1) away from the blade rubber (13), characterised in that the free edge of the vane (17) carries at least one roller (25) intended to engage the windscreen (23).

2. A windscreen wiper blade as claimed in claim 1, characterised in that the vane (17) carries two rollers (25) spaced apart.

3. A windscreen wiper blade as claimed in claim 2, characterised in that the rollers (25) are located one third of the length of the vane (17) from each end.

4. A windscreen wiper blade as claimed in claim 2, characterised in that the rollers (25) are located at each end of the vane (17).

5. A windscreen wiper blade as claimed in any one of the preceding claims, characterised in that the vane (17) is pivotally connected to the wiper blade (1).

6. A windscreen wiper blade as claimed in any one of the preceding claims, characterised in that the face of the vane (17) nearest to the wiper blade (1) carries a channel (29) for screenwash fluid.

7. A windscreen wiper blade as claimed in claim 6, characterised in that the channel (29) is provided with one or more washer jets (31).

8. A windscreen wiper blade as claimed in any one of the preceding claims, characterised in that the blade comprises a primary yoke (3) and a plurality of subsidiary yokes (5) and the vane (17) is pivotally connected to the primary yoke (3) thereof.

9. A vane (17) for attachment to a windscreen wiper blade (1) characterised by attachment means at one edge for attachment to the wiper blade (1) and at least one roller (25) is provided on the opposite edge of the vane (17), the roller(s) being intended to engage the windscreen (23).

FIG.1

FIG.2

European Patent Office

**EUROPEAN SEARCH REPORT**

Application Number

EP 91 30 2487

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | GB-A-2146891 (CHAMPION SPARK PLUG)<br>* page 1, line 114 - page 2, line 9; figure 4 *<br>--- | 1-4, 6,<br>7, 9 | B60S1/38<br>B60S1/52 |
| Y | DE-A-2736606 (DAIMLER-BENZ)<br>* page 3, lines 15 - 18; figure *<br>--- | 1-4, 6,<br>7, 9 | |
| Y | FR-A-2603850 (PEUGEOT ET AL)<br>* page 6, lines 6 - 13 *<br>--- | 6, 7 | |
| A | EP-A-0311471 (VALEO SYSTEMES D'ESSUYAGE)<br>* page 4, lines 44 - 51 *<br>--- | 6, 7 | |
| A | FR-A-2594083 (CHAMPION SPARK PLUG)<br>* the whole document *<br>------ | 5, 8 | |
| | | | TECHNICAL FIELDS SEARCHED (Int. Cl.5 )<br><br>B60S |

The present search report has been drawn up for all claims

| Place of search | Date of completion of the search | Examiner |
|---|---|---|
| BERLIN | 02 JULY 1991 | STANDRING, M |

EPO FORM 1503 03.82 (P0401)